# EUROPÄISCHE PATENTSCHRIFT

(11) **EP 2 044 661 B1**
(45) Veröffentlichungstag und Bekanntmachung des Hinweises auf die Patenterteilung: **01.05.2013**
(21) Anmeldenummer: 07787575.5
(22) Anmeldetag: 16.07.2007
(51) Int. Cl.: H01R 39/36

(54) **EINRICHTUNG ZUM ANSCHLUSS EINES ZUM EINSATZ IN EINEM KRAFTSTOFFBEHÄLTER INSBESONDERE EINES KRAFTFAHRZEUGES VORGESEHENEN ELEKTROMOTORS**
DEVICE FOR CONNECTING AN ELECTRIC MOTOR INTENDED FOR USE IN A FUEL TANK, IN PARTICULAR OF A MOTOR VEHICLE
DISPOSITIF DE RACCORDEMENT D'UN MOTEUR ÉLECTRIQUE PRÉVU POUR ÊTRE MIS EN PLACE DANS UN RÉSERVOIR D'ESSENCE, EN PARTICULIER D'UN VÉHICULE AUTOMOBILE

(30) Priorität: 18.07.2006 DE 102006033231
(43) Veröffentlichungstag der Anmeldung: 08.04.2009
(73) Patentinhaber: Continental Automotive GmbH, 30165 Hannover (DE)
(72) Erfinder: MUEHLHAUSEN, Ralf, 36199 Rotenburg (DE); WARNKE, Wolfgang, 37293 Herleshausen (DE)
(86) Internationale Anmeldenummer: PCT/EP2007/057307
(87) Internationale Veröffentlichungsnummer: WO 2008/009653

(56) Entgegenhaltungen:
- DE-A1- 19 954 733
- US-A- 3 148 295

## Beschreibung

Die Erfindung betrifft eine Einrichtung zum Anschluss eines zum Einsatz in einem Kraftstoffbehälter insbesondere eines Kraftfahrzeuges vorgesehenen Elektromotors mit Anschlusskontakten, mit über einen Läufer eines Rotors gleitenden Kohlebürsten und mit zwischen den Anschlusskontakten und den Kohlebürsten angeordneten elektrischen Leitungen.

Solche Einrichtungen werden meist zusammen mit den Kohlebürsten als bauliche Einheit gefertigt und sind aus der Praxis bekannt. Der in den Kraftstoffbehälter eingesetzte Elektromotor dient dabei zum Antrieb einer Kraftstoffpumpe. Bei der aus der Praxis bekannten Einrichtung sind die Anschlusskontakte auf einem Kunststoffteil befestigt. Ober die Anschlusskontakte lässt sich der Elektromotor mit einem Stromnetz des Kraftfahrzeuges verbinden. In dem Kunststoffteil ist zudem meist ein einen Kondensator sowie zwei Entstördrosseln aufweisendes Entstörteil angeordnet. Das Kunststoffteil wird mit dem Elektromotor verbunden. Der aus dem Kunststoffteil herausgeführte Teilbereich der Leitung ist als flexible Kupferlitze gestaltet und bis zu der jeweiligen Kohlebürste geführt, die im Kontakt mit einem Kollektor des Elektromotors steht. Nachteilig bei der bekannten Einrichtung ist, dass die elektrische Leitung in aggressiven Medien wie beispielsweise Kraftstoff korrodiert und anschließend zerstört wird.

Aus der US-A-3 148 295 ist eine Leitungsverbindung bekannt , bei der Leitungen eine Umhüllung aus Polytetrafluorethylen haben

Aus der DE 199 21 540 A1 ist bekannt, den Bereich der Verbindungsstelle einer elektrischen Leitung mit einem Kontaktelement mit einem kraftstoffbeständigen Kunststoff zu umspritzen. Als kraftstoffbeständige Kunststoffe werden POM und PPS genannt. Hierbei hat sich gezeigt, dass die Umspritzung mit POM oder PPS zu einer hohen Steifigkeit der elektrischen

Leitung führt. Aufgrund des Verschleißes der Kohlebürsten müssen diese nachgestellt werden, um im Kontakt mit dem Kollektor zu bleiben. Aufgrund der hohen Steifigkeit der elektrischen Leitung ist ein permanenter Kontakt der verschleißenden Kohlebürsten mit dem Kollektor nicht mehr gewährleistet.

Der Erfindung liegt die Aufgabe zugrunde, eine oben genannte Einrichtung zu schaffen, die einerseits wirksam gegen den Angriff von aggressiven Medien geschützt ist und andererseits den permanenten Kontakt der Kohlebürsten mit dem Kollektor des Elektromotors gewährleistet.

Die Aufgabe wird erfindungsgemäß dadurch gelöst, dass die elektrischen Leitungen eine Umhüllung mit einer Wandstärke von 0,1mm aufweist.

Die sehr gute Kraftstoffbeständigkeit und die geringe Quellneigung von Polytetrafluorethylen (PTFE) ermöglicht die Ausbildung einer Umhüllung von elektrischen Leitungen mit einer geringen Wandstärke. Durch die geringe Wandstärke der Umhüllung besitzen derartige elektrische Leitungen eine sehr hohe Flexibilität. Die elektrische Leitung ist dadurch ausreichend beweglich, um Nachstellbewegungen der Kohlebürsten infolge von Verschleiß zu folgen. Somit ist gewährleistet, dass die Kohlebürsten über die gesamte Lebensdauer im permanenten Kontakt mit dem Kollektor des Elektromotors stehen.

In einer weiteren vorteilhaften Ausgestaltung der Erfindung, in der das elektrische Bauteil in einem Gehäuse angeordnet ist und die elektrischen Leitungen aus dem Gehäuse geführt

An einem Ausführungsbeispiel wird die Erfindung näher erläutert. Die dazugehörige Zeichnung zeigt in
- Fig.1: schematisch einen Elektromotor in einem Längsschnitt mit einer erfindungsgemäßen Einrichtung,
- Fig.2: eine stark vergrößerte Darstellung der erfindungsgemäßen Einrichtung.

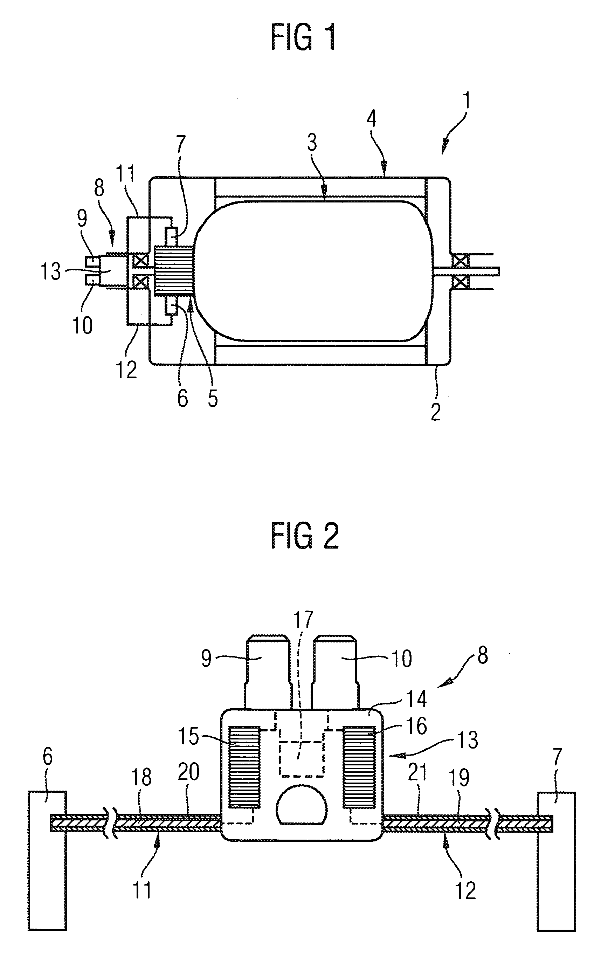

Figur 1 zeigt einen Elektromotor 1 mit einem drehbar in einem Gehäuse 2 gelagerten Rotor 3 und mit einem Stator 4. Der Rotor 3 hat zu seiner Versorgung mit elektrischem Strom einen Läufer 5, über den Kohlebürsten 6, 7 gleiten. Die Versorgung des Läufers 5 mit elektrischem Strom erfolgt über eine Einrichtung 8 mit Anschlusskontakten 9, 10 und mit elektrischen Leitungen 11, 12, zwischen denen ein Entstörteil 13 angeordnet ist. Die elektrischen Leitungen 11, 12 führen zu den Kohlebürsten 6, 7. An den Anschlusskontakten 9, 10 lassen sich nicht dargestellte Steckkontakte eines Stromnetzes anschließen. Dieser Elektromotor 1 ist zum Antrieb einer Kraftstoffpumpe eines Kraftfahrzeuges vorgesehen und wird mit Kraftstoff durchströmt.

Figur 2 zeigt stark vergrößert die Einrichtung 8 aus Figur 1. Die Einrichtung 8 hat ein Kunststoffteil 14 zur Halterung der Anschlusskontakte 9, 10 und jeweils einer zwischen den Anschlusskontakten 9, 10 und den elektrischen Leitungen 11, 12 angeordneten Drossel 15, 16. Die Anschlusskontakte 9, 10 sind untereinander mit einem Kondensator 17 verbunden. Die Drosseln 15, 16 und der Kondensator 17 bilden das Entstörteil 13. Die elektrischen Leitungen 11, 12 verbinden den in Figur 1 dargestellten Elektromotor 1 mit den Polen eines Stromnetzes. Beide elektrischen Leitungen 11, 12 bestehen aus Kupferlitzen 18, 19, die mit PTFE 20, 21 umspritzt sind. Zur besseren Darstellbarkeit, sind die elektrischen Leitungen 11, 12 vergrößert dargestellt. Die elektrischen Leitungen sind trotz der Umspritzung mit PTFE 20, 21 so flexibel, dass sie sich bei einem Verschleiß der Kohlebürsten 6, 7 mitbewegen und die Stromversorgung des in Figur 1 dargestellten Elektromotors 1 zuverlässig sicherstellen.

## Patentansprüche

1. Einrichtung zum Anschluss eines zum Einsatz in einem Kraftstoffbehälter insbesondere eines Kraftfahrzeuges vorgesehenen Elektromotors (1) mit Anschlusskontakten (9, 10), mit über einen Läufer eines Rotors gleitenden Kohlebürsten (6, 7) und mit zwischen den Anschlusskontakten (9, 10) und den Kohlebürsten (6, 7) angeordneten elektrischen Leitungen (11, 12), dass die elektrischen Leitungen (11, 12) eine Umhüllung aus Polytetrafluorethylen (20, 21) aufweisen, **dadurch gekennzeichnet, dass** die Umhüllung (20, 21) eine wandstärke von 0,1mm aufweist.

## Claims

1. Device for connecting an electric motor (1) intended for use in a fuel tank, in particular of a motor vehicle, having connection contacts (9, 10), having carbon brushes (6, 7) which slide over an armature of a rotor, and having electrical leads (11, 12) arranged between the connection contacts (9, 10) and the carbon brushes (6, 7), wherein the electrical leads (11, 12) have a sheath comprising polytetrafluoroethylene (20, 21), **characterized in that** the sheath (20, 21) has a wall thickness of 0.1 mm.

## Revendications

1. Dispositif de raccordement d'un moteur (1) électrique prévu pour être mis dans un réservoir à carburant, notamment d'un véhicule automobile, et ayant des contacts (9, 10) de borne, comprenant des balais (6, 7) de charbon glissant sur l'induit d'un rotor, et ayant des lignes (11, 12) électriques disposées entre les contacts (9, 10) de borne et les balais (6, 7) de charbon, les lignes (11, 12) électriques ayant une gaine en polytétrafluoroéthylène (20, 21), **caractérisé en ce que** la gaine (20, 21) a une épaisseur de paroi de 0,1 mm.
